# EUROPEAN PATENT SPECIFICATION

(11) **EP 1 753 195 B1**
(45) Date of publication and mention of the grant of the patent: **07.03.2012**
(21) Application number: 05106925.0
(22) Date of filing: 27.07.2005
(51) Int. Cl.: H04L 29/06

(54) **Server computer, client device and web service implemented data processing method**
Serverrechner, Client-Einrichtung und webdienstimplementiertes Verfahren zur Datenverarbeitung
Ordinateur serveur, dispositif client et procédé de traitement de donnés implementé par un service web

(43) Date of publication of application: 14.02.2007
(73) Proprietor: SAP AG, 69190 Walldorf (DE)
(72) Inventor: Enenkiel, Achim, 76139, Karlsruhe (DE)
(74) Representative: Richardt Patentanwälte

(56) References cited:
- EP-A- 1 307 018
- WO-A-2005/060203
- US-B1- 6 317 786
- US-B1- 6 327 622
- SHENG-TZONG CHENG ET AL: "A new framework for mobile Web services" APPLICATIONS AND THE INTERNET (SAINT) WORKSHOPS, 2002. PROCEEDINGS. 2002 SYMPOSIUM ON NARA, JAPAN 28 JAN.-1 FEB. 2002, LOS ALAMITOS, CA, USA,IEEE COMPUT. SOC, US, 28 January 2002 (2002-01-28), pages 218-222, XP010587882 ISBN: 0-7695-1450-2
- ROSELI PERSSON HANSEN ET AL: "Web Services: An Architectural Overview" INTERNET CITATION, 7 November 2002 (2002-11-07), XP002313934
- YOSHIKAWA C ET AL: "Using Smart Clients to build scalable services" PROCEEDINGS OF THE USENIX ANNUAL TECHNICAL CONFERENCE, 6 January 1997 (1997-01-06), pages 105-117, XP002196135
- HUNG J C ET AL: "Mobile distributed web server system" CYBER WORLDS, 2002. PROCEEDINGS. FIRST INTERNATIONAL SYMPOSIUM ON 6-8 NOV. 2002, PISCATAWAY, NJ, USA,IEEE, 6 November 2002 (2002-11-06), pages 346-353, XP010632534 ISBN: 0-7695-1862-1
- CROVELLA M E ET AL: "Dynamic Server Selection In The Internet" CONFERENCE PROCEEDINGS ARTICLE, 23 August 1995 (1995-08-23), pages 158-162, XP010269607

## Description

### Field of the invention

The present invention generally relates to the field of data processing, and more particularly to web services.

### Background and prior art

Web services are an emerging technology that offers the dual promise of simplicity and pervasiveness. Web services represent the next level of function and efficiency in e-business. A Web service can be viewed as any system by which an application or data processing service can be provided to other applications on the Internet.

Web services may be informational or transactional. That is, some services provide information of interest to the requestor while other services may actually lead to the invocation of business procedures. Examples of publicly available Web services today include stock quote services, services to retrieve news from Web news sources, and currency conversion services. For example, U.S. Pat. No. 6,604,135 discloses a method and system for location based web services.

One example of Web services are the services responsive to simple object access protocol (SOAP) messages. SOAP is an application invocation protocol that defies a protocol for exchanging information encoded as XML messages. Normally these services are described by WSDL (Web Service Description Language) notation stored in WSDL documents.

A WSDL document can be stored in numerous ways such as in a file, in a DB2 XML registry / repository, or in a DB2 based UDDI registry, for example. UDDI (Universal Description, Discovery, Integration) is a protocol for describing Web services such that interested parties may easily discover them. Specifications for this registry and use of WSDL in the registry are available at http://www.uddi.org/. Service providers may register their services in a UDDI, specifying technical information about how to invoke the service. Often a WSDL document is stored in a UDDI registry in order to define the messages a particular Web services accepts and generates.

The design of UDDI allows enterprises that own Web service enabled applications to publish data about themselves and their services. By providing this information, UDDI implements a simplified form of searching for those interested in locating a particular service in which to fulfil an application process. The conventional UDDI search is focussed on single search criteria such as business name, business location, business categories, business identifier, service type by name, and discovery URL (Uniform Resource Locator).

Various approaches for implementing Web services are known from the prior art, such as from US patent applications 20030093436A1, 20030055868A1, 20030055624A1, 20030018661, 20030110242, 20030163513A1, 20040064503A1, 20040045005A1, 20040003130A1, 20030187841A1.

Further background information is disclosed in : YOSHIKAWA C ET AL : "Using smart clients to build scalable services", Proceedings of the USENIX annual conference, pages 105-117, 06 January 1997, XP00219635.

### Summary of the invention

The invention relates to a client device as claimed in the independent claim 1, as well as a data processing method as claimed in independent claim 8, as well as a computer program product as claimed in the independent claim 9. Preferred embodiments are described in the dependent claims.

The client device according to the invention communicates with a server computer comprising means for providing a central web service, the web service having a central web service address, interface means for receiving a web service request addressed to the central web service address and for forwarding the web service request to one of a plurality of alternative web services, the central web service being adapted to select the one of the plurality of alternative web services.

The central web service that is provided by the server computer can act as a receiver for web service requests from a plurality of client devices. In this respect the central web service can serve as a central "hub" for receiving and forwarding the web service requests.

The central web service uses some selection criterion to select one of a plurality of alternative web services for processing a given web service request received from one of the client devices.

The client devices only require the address of the central web service but not the addresses of the alternative web services. The central storage of the addresses of the alternative web services and of the selection logic on the server computer facilitates maintenance. When alternative web services are added, deleted or when addresses of alternative web services change, the respective information needs to be updated only on the server computer but not on the client devices. Further, if the selection logic changes, e.g. if a selection criterion or a selection rule changes, the selection logic does only need to be updated centrally on the server computer.

This is particularly advantageous for implementing application programs on the client devices that require one or more web services. The application programs do only require a single central web service address for each required service as a common point of reference. If the selection logic for selection of alternative web services, web services addresses or other parameters change, this does not need to be reflected on the individual client devices.

For example, the central web service selects one of the alternative web services for processing a web service request received from one of the client devices for load balancing. For example, the central web service assigns web service requests to the available alternative web services in a round-robin manner such that the average number of web service requests to be processed by each of the alternative web services per time unit is about equal.

For example, the web service requests contain location information being indicative of a geographic location of the client device from which the respective web service request originates. For example, the client device can be a wireless mobile communication device, such as a mobile computer, smartphone, personal digital assistant or a similar portable or handheld electronic appliance. The client device can have integrated means for determining a current geographic location of the client device, such as by means of the global positioning system (GPS) or by using a cellular communication network, such as a cell identifier, triangulation techniques or similar techniques.

The central web service can use the location information for the selection of one of the alternative web services. For example, the web service request received from the client device can be location specific. For example, a user of the client device requests local news or a local weather report by means of the web service request. In this instance the central web service selects one of the alternative web services that is in the proximity to the requesting client device.

Alternatively, a user requests the delivery of a product by means of the web service request. In this instance it can be advantageous to forward the web service request to a web service that is in the proximity of the requesting client device as this can facilitate the supply chain management for delivery of the product.

In another application the user requests traffic information by means of the web service request. In this instance the central web service selects one of the alternative web services using the location information in order to forward the web service request to an appropriate web service that can deliver traffic information that is relevant to the present location of the user device.

For example, the web service request carries a user identifier. The central web service performs a selection of one of the alternative web services by means of the user identifier for selection of a user specific web service. For example, the registered users are grouped into several user groups whereby each user group is assigned to one of the alternative web services. This can be done for the purpose of load balancing or to provide user group specific variations of the web service.

In a further example, the web service request carries a tax number. In this application scenario the central web service serves as a single reception point for receiving electronic tax declarations or other tax related notifications or submissions. Each of the alternative web services belongs to a local tax office. Based on the tax number the central web service determines the competent local tax office for receiving and processing the tax declaration and thus the web service that is assigned to that local tax office. This greatly facilitates the filing of electronic tax declarations and the distributed processing of such tax declarations by local tax offices.

For example, the web service request carries location information for determination of location dependant tax rates.

The client device according to the invention has means for storing a central web service address, means for generating a web service request, and interface means for sending the web service request to the central web service address and for receiving a web service response from one of a plurality of alternative web services selected by the central web service.

The present invention is particularly advantageous as each client device stores the same central web service address for a given web service. This facilitates implementation and maintenance of application programs that use such a web service. When the web service that is used for processing a client device's web service request is changed or if the web service's address is changed this does not require any change on the basis of the client device or its application program as such changes are dealt with by the central web service that maintains the alternative web service's addresses.

According to the invention, the client device has means for determining whether the central web service is available or not. If the central web service is unavailable, such as because of a server outage, the client device performs the selection of the web service. For this purpose the client device has a local storage for storage of the alternative web service's addresses.

In order to limit the administrative overhead for maintaining the address list of alternative web services on the client device it is preferred that the address list of alternative web services stored on the client device is updated less frequently than the respective address list of alternative web services used by the central web service.

When one of the web services has been selected by the client device, the client device re-sends its web service request to the selected web service.

In accordance with an embodiment of the invention, the determination whether the central web service is available or not is made using a time-out criterion. For example, if the client device has not received an acknowledgement or a response to its web service request that it has sent to the central web service within a predefined time interval, the time-out criterion is met and the central web service is considered unavailable by the client device. In response the client device performs a selection of one of the alternative web services locally using its list of alternative web service addresses.

In accordance with an embodiment of the invention, the client device has location determination means, such as a GPS receiver and/or an interface to a wireless cellular communication network that provides the location information. For example, the location information indicates a current geographic position of the client device. The location information is communicated from the client device to the central web service together with the web service request. The location information is used by the central web service for selection of one of the alternative web services. For example, the central web service selects one of the web services that is closest to the current geographic position of the client device or that provides a local version of the requested web service.

### Brief description of the drawings

In the following preferred embodiments of the invention will be described in greater detail by way of example only making reference to the drawings in which:
- Figure 1: is a block diagram of a data processing system,
- Figure 2: is a flowchart illustrating a method,
- Figure 3: is a block diagram of a preferred embodiment of a data processing system of the invention,
- Figure 4: is a flow diagram of a further preferred embodiment of a method of the invention,
- Figure 5: illustrates the structure of an embedded mark-up language document that can be used for initiating the web service request,
- Figure 6: illustrates the structure of the embedded mark-up language document of fig. 5 after its conversion to a mark-up language data package.

### Detailed description

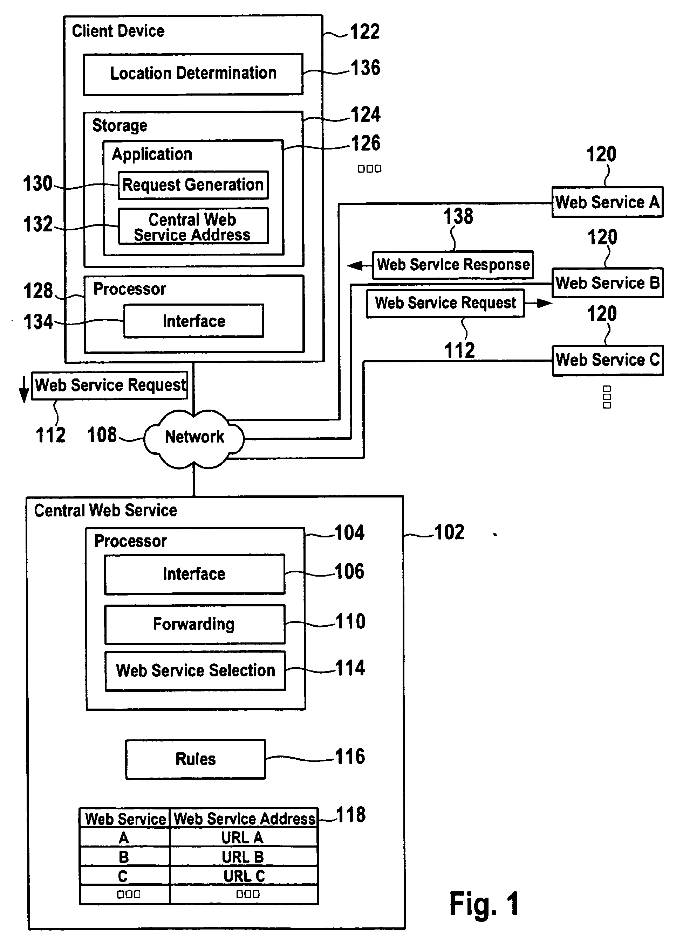

Fig. 1 shows a distributed data processing system 100 that has a server computer 102 for providing a central web service. The server computer 102 has at least one processor 104 for providing an interface 106 to a network 108. The network 108 can be a telecommunication and/or computer network, such as the Internet.

The processor 104 serves for execution of a program component 110 for forwarding the web service request 112 received by the central web service to a selected alternative web service.

Further, the processor 104 serves for execution of a program component 114 for selection of one of the alternative web services. The program component 114 uses selection rules 116 of the central web service for selection of one of the alternative web services. The selection rules 116 can implement a load balancing criterion for selection of one of the alternative web services for processing the web service request 112 such that the processing load of the alternative web services is balanced. This can be accomplished by a suitable arbitration scheme, such as round-robin arbitration.

For example, when the server computer 102 receives a sequence of web service requests 112 i, ii, iii, iv. v.... via the network 108 the first web service i of the sequence is assigned to the web service A, the second web service request ii of the sequence is assigned to the web service B. the third web service request iii of the sequence is assigned to the web service C, the fourth web service request iv of the sequence is assigned to the web service A, the fifth web service v of the sequence is assigned to the web service B, ... assuming that there are three alternative web services A. B and C. Assuming that all web services requests 112 require about the same data processing resources the loading of the alternative web services A. B, C can thus be balanced.

In addition the web service requests 112 can have assigned priorities. For example, there are three different priorities, whereby web service requests having the highest priority are always assigned to the web service A. web service requests having the second highest priority are always assigned to the web service 6 and lowest priority web service requests are always assigned to the web service C. Arbitration of web services requests 112 having the same priority can be performed by means of a round-robin arbitration scheme or another arbitration scheme.

Alternatively or in addition each web service request 112 can carry location information. For example, the location information identifies the current geographic location of the originating client device from which the web service request 112 has been sent to the central web service. The selection of one of the alternative web services is performed by the program component 114 using the location information by application of the selection rules 116 that contain a location criterion. For example, the web service A is assigned to a first geographical region, the web service B is assigned to a second geographical region, and the web service C is assigned to a third geographical region.

When the location information of the web service request 112 indicates, that the web service request 112 has been received from a client device that is currently located in the first geographic region the alternative web service A is selected. Likewise, if the web service request 112 is received from a client device that is looated in the second geographic region, the alternative web service B is selected and if the web service request 112 is received from the third geographic region, the alternative web service C is selected.

This is particularly useful if the aftemative web services A. B. C are Iocation specific variants of the same web service. For example, the web service provided by the alternative web services A. B, C is weather forecast information, local news or other information that is location specific.

Alternatively or in addition a web service request 112 received by the server computer 102 via the network 108 contains a user identifier. The user identifier can be used for identification of an individual, an organizational entity, a company and/or a machine user. In this instance the program component 114 uses the user identifier for selection of one of the alternative web services by application of the selection rules 116 that include a user identifier specific selection critenon.

For example, the selection rules 116 define three disjunct groups of users by means of the respective user identifiers. The first group of users is assigned to the web service A. the second group of users is assigned to the web service B and the third group of users is assigned to the web service C.

When the server computer 102 receives a web service request 112 with a user identifier, the program component 114 applies the selection rules 116 in order to determine the group of users to which the user identifier received with the web service request 112 belongs and thus the alternative web service that is to be used for processing of the web service request 112. For example, if the user identifier of the web service request 112 identifies the originating user of the web service request 112 as belonging to the first group of users, the alternative web service A is selected. Likewise, if the user identifier identifies the web service request 112 as originating from a user of the second user group, the alternative web service B is selected for processing of the web service request 112. etc.

For example, the user Identifier can be a tax number. In this case, the web service request 112 contains tax related information, such as a tax declaration of an individual or a company. The web service request is thus directed to the filing of a tax declaration.

In this instance the web service A is provided by a local tax office that is competent for processing of tax declarations of individuals and/or companies that have their place of residence or place of business, respectively, in a first geographic region. Likewise, the web service B is provided by a local tax authority that is competent for a second geographic region and the third alternative web service C is provided by a local tax authority that is competent for a third geographic region, etc. The selection rules 116 can be implemented as a mapping table that assigns each tax number to one of the alternative web services. When the web service request 112 containing a tax declaration and a tax number is received, the program component 114 uses the mapping table that implements the selection rules 116 for determination of the alternative web service that is competent for processing of the respective tax declaration.

After selection of one of the alternative web services A, B, C,... the program component 110 forwards the web service request 112 to the web service address of the selected alternative web service as given by the table 118 stored on the server computer 102. The alternative web services 120 A, B, C,... are coupled to the network 108. Typically, the alternative web services 120 provide the same or substantially the same web service, such as location specific variants of the same web service.

A plurality of client devices 122 can be coupled to the central web service via the network 108. In the following one of the client devices 122 is considered by way of example.

The client device 122 has a storage 124 for storing an application program 126 that contains computer executable instructions to be executed by the at least one processor 128 of the client device 122. The application program 126 comprises a program module 130 for generating the web service request 112 and the central web service address 132 of the central web service 102.

The processor 128 provides an interface 134 for sending the web service request 112 to the central web service via the network 108.

As an option, the client device 122 comprises a location determination module 136 for determining a current geographic location of the client device 122. For example, the location determination module 136 can be implemented by means of GPS (global positioning system) and/or by location determination services provided by a cellular telecommunication network if the client device 122 is a mobile telephone, or another portable wireless device.

The application program 126 can invoke the program niodule 130 for generating the web service request 112 and reading the central web service address 132 to which the web service request 112 is to be directed. The program module 130 can access the location determination module 136 for inclusion of location information in the web service request 112. Alternatively or in addition other information can be included in the web service request such as the priority of the request, a user Identifier and/or other information.

For example, the application program 126 is an enterprise resource planning program or an application program that Includes a module for automatically generating tax declarations.

When the central web service receives the web service request 112 the program component 114 is invoked for selection of one of the alternative web services 120. The program component 114 uses the selection rules 116 by application of the respective selection criterion on the information contained in the web service request 112. After selection of one of the alternative web services, the selected web service's address is looked up from the table 118 by the program component 114 and the program component 110 is invoked in order to forward the web service request 112 to the selected web service 120, which is the web service B in the example considered in fig. 1. The selected alternative web service B receives the forwarded web service request 112 via the network 108. In response the web service B processes the web service request 112 and generates a respective web service response 138. The web service response 138 is transmitted to the client device 122 via the network 108 for further processing by the application program 126.

It is to be noted that all client devices 122 can use the same central web service address 132 as the selection of the alternative web service 120 that actually processes the web service request 112 is performed by the central web service. This has the advantage that the application program 126 does not need to be changed if one or more of the web service addresses of the alternative web services 120 is changed and/or if the selection rules are modified. As a consequence frequent updates of the application program 126 can be avoided.

Alternatively the client device is an automation component of an industrial control system. In this instance the application program 126 implements a control function that requires a web service, such as for obtaining a control parameter.

Alternatively the client device is a car navigation system. The car navigation system has a user interface that enables a user to invoke the program module 130 in order to generate a web service request 112, e.g. for requesting a hotel reservation for a hotel that is in the proximity of the target address of the navigation. The web service request 112 carries the target address and/or the geographical coordinates of the target address. The central web service selects one of the web services 120 that covers a region containing the target address as far as hotel reservations are concerned.

The selected web service 120 returns a web service response 138 that contains a suggestion for a hotel reservation or a list of such suggestions, In addition the web service response 138 contains the hotel address and/or the geographical coordinates of each suggested hotel in a format that can be automatically imported into the navigation system.

If the user enters an acceptance of one of the suggested hotel reservations, the hotel address and/or the geographical coordinates of the hotel are automatically imported into the address book of the car navigation system. At the user's option the navigation is continued into the direction of the original target address or the target of the navigation is changed to the hotel address. If the car navigation system does not receive the web service response 138 within a predefined period of time, it uses hotel information stored on a local data carrier, such as a CD ROM or DVD that also contains the road map information that forms the basis for the navigation.

The same procedure can be used with respect to other points of interest that are in the proximity of the target address or in the proximity of the current location of the car. In the latter case the web service request 112 contains the current geographical location or address of the car rather than the target address of the navigation.

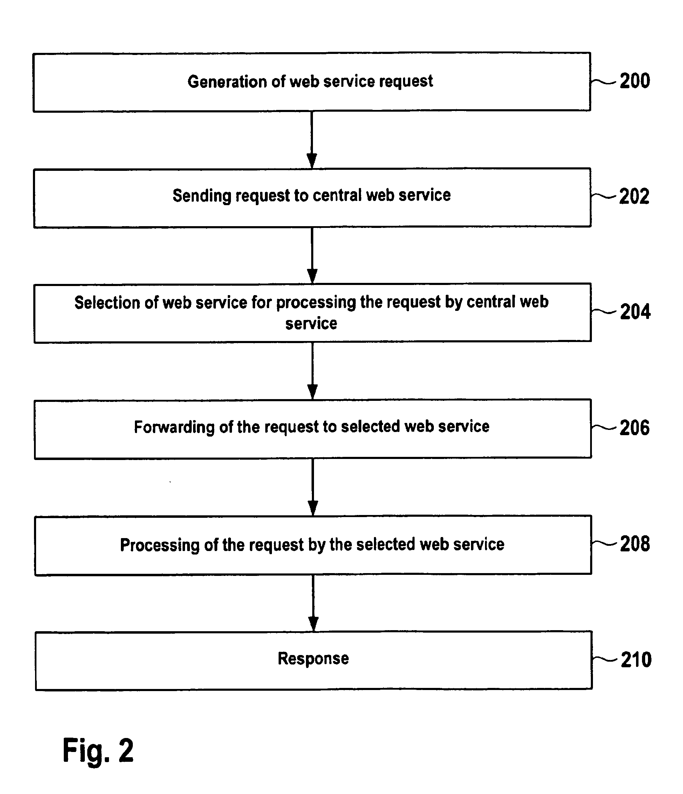

Fig. 2 shows a respective flowchart. In step 200 a web service request is generated by one of the client devices. The web service request is sent to the central web service in step 202.

The central web service selects one of the alternative web services for processing of the received web service request. The selection of one of the alternative web services is performed by application of one or more predefined selection criteria. This can include location specific, priority specific and/or user specific selection criteria.

In step 206 the web service request is forwarded to the selected alternative web service. In response the alternative web service that has received the web service request performs a processing step (step 208) in order to generate a response to the web service request that is sent back to the requesting client device (step 210).

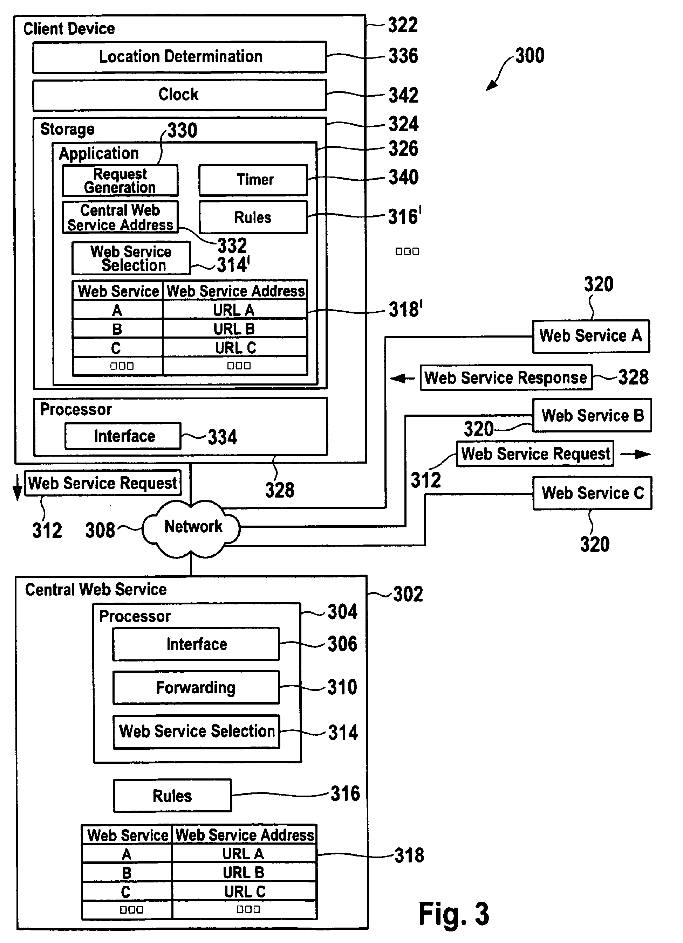

Fig. 3 shows a block diagram of an embodiment of a data processing system of the invention. Elements of fig. 3 that correspond to elements of fig. 1 are designated by like reference numerals.

In the embodiment considered here with respect to fig. 3 the client device 322 stores a table 318 that is a local copy of the table 318 stored on the server computer 302 that provides the central web service. The table 318' can form an integral part of the application program 326'. In addition, the application program 326' can contain a program component 314' that is a local copy of the respective program component 314 ot the server computer 302. Likewise, the application program 326 comprises selection rules 316' which are a local copy of the selection rules 316 used by the server computer 302.

In addition the application program 326 has a program component 340 for determining if a time-out condition with respect to the processing of the web service request 312 is met. The program component 340 can be implemented as a timer that uses a system clock 342 of the client device 322 for determining if the time-out condition is met or not.

In operation the client device 322 generates the web service request 312 analogous to the embodiment of fig. 1 by sending the web service request 312 to the central web service address 332. In addition the program component 340 is invoked when the web service request 312 has been sent to the central web service.

If the web service response 338 Is received by the client device 322 before the time-out condition has been met, the program component 314' is not invoked, if however, no web service response 338 is received within the time limit set by the program component 340, the program component 340 invokes the program component 314' for local selection of the alternative web service by the client device 322 itself using the table 318' and the rules 316'. The web service request 312 is then resent directly to the alternative web service selected by the program component 314'.

This way a two stage mechanism is provided as a failure protection:

The first stage is constituted by the server computer 302. If the server computer 302 becomes unavailable due to a server outage, the client device 322 will not receive a response to its web service request 312. If the respective time-out condition is met, the second stage is invoked.

The second stage for the failure protection is constituted by the local selection logic for selection of one of the alternative web services implemented in the application program 326. If the server computer 302 goes down, it cannot provide access to one of the alternative web services. In this case the afflicted client device 322 autonomously determines one of the alternative web services and re-sends its web service request 312 to the locally selected alternative web service.

In order to limit the administrative overhead for maintaining the local copies of the program component 314', the selection rules 316' and the table 318', it is preferred that the respective components used by the server computer 302, i.e. the program component 314, the selection rules 316 and the table 318, are updated more frequently than the respective local copies used by the client device 322 in case of a server outage.

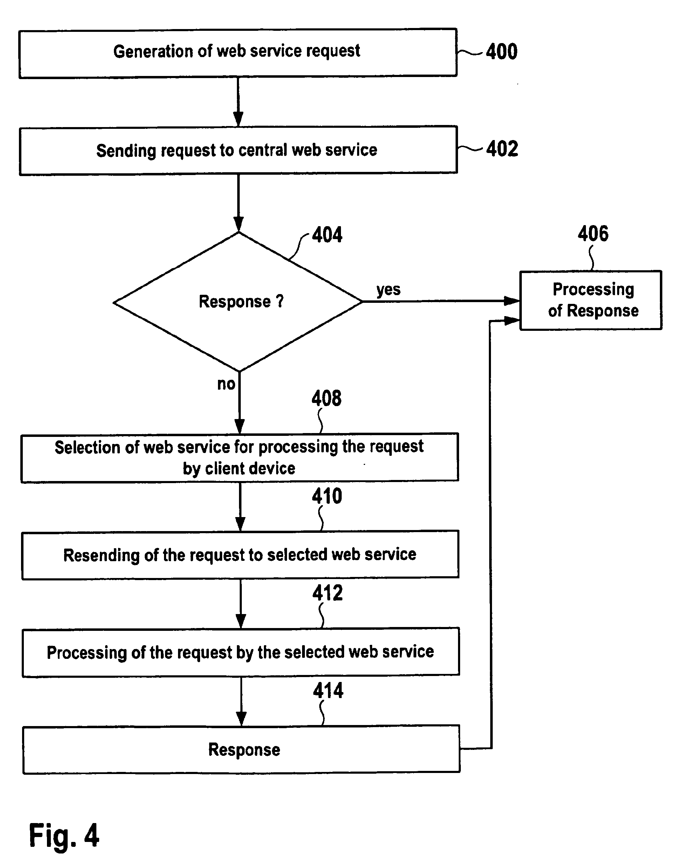

Fig. 4 shows a respective flowchart.

In step 400 a web service request is generated by the client device. The web service request is sent to the central web service in step 402. In step 404 the client device checks if within a predefined time limit a response to the web service request has been received. If this is the case the response is processed in step 406. If this is not the case the control goes to step 408 for local selection of one of the alternative web services by the client device itself using a local copy of the respective selection logic.

In step 410 the web service request that has been generated in step 400 is re-sent to the alternative web service that has been selected in step 408. The selected web service processes the web service request (step 412) and provides a web service response to the requesting client device in step 414. From there the control goes to step 406 for further processing of the response by the client device.

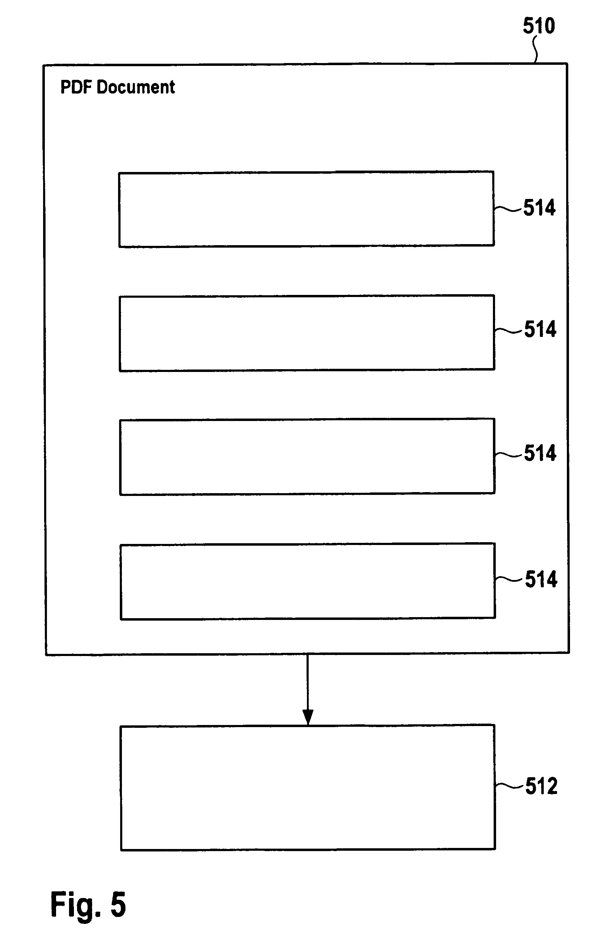

Fig. 5 shows an embedded mark-up language document 510 that can be used for entering user data to be included in the web service request (cf. web service 112 of fig. 1 and web service request 312 of fig. 3). Preferably the application program of the client device uses the embedded mark-up language document 510 for the entry of user data.

In the preferred embodiment considered here embedded mark-up language document 510 is an embedded XML document that has embedded XML data 512.

In the example considered here embedded mark-up language document 510 is an electronic data entry form that has data entry fields 514 for user data. Preferably each data entry field 514 has an associated explanatory text that explains the user data to which the respective data entry field relates. Usually at least some of the data entry fields 514 are compulsory data entry fields; some of the data entry fields 514 may be optional and can be left open at the user's option.

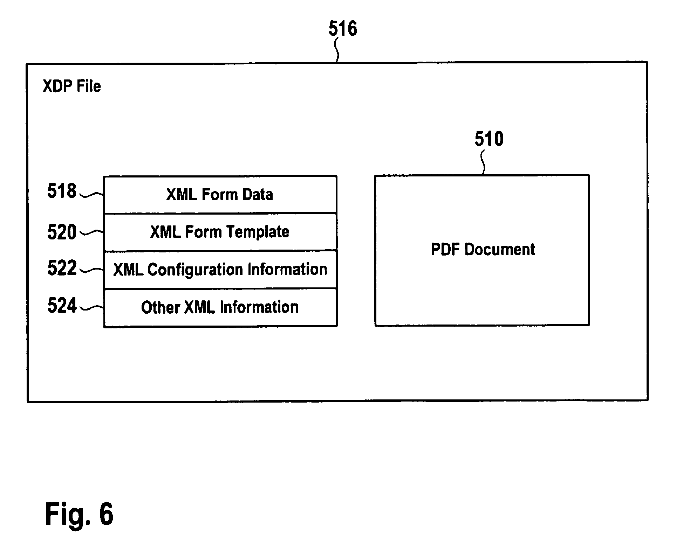

Fig. 6 shows the structure of embedded mark-up language document 510 after its conversion to an XML data package (XDP) file 516. The XDP file 515 contains the data entry fields 514, the textual information and the graphics, if any, of the embedded mark-up language document 510 in encoded form.

In addition XDP file 516 has XML form data 518. The XML form data 518 carries the user data that has been entered into the data entry fields 514. The user data is encoded in the XML form data 518 according to an arbitrary XML schema chosen by the developer of the embedded mark-up language document 510 during the design phase. The schema can be an industry-standard, an enterprise standard, or completely customised. Some examples of industry-standard schemas are ACORD (insurance). XBRL (finance). HL7 (healthcare), and SF424 (eGovemment).

XML form template 520 of XDP file 516 contains the mapping of the XML form data 18 to the data entry fields 514 as well as the logic that controls the interactive behaviour of the embedded mark-up language document 510, such as calculations and data validations.

XML configuration information 522 of XDP file 516 is a global reference for database and web services SOAP connections. XML configuration information 522 is used by the XML form template 520 as such a global reference.

Further. XDP file 516 can contain other XML information 524. Such other XML information 524 can include customer XML information such as a schema file to facilitate validation, XML digital signatures, content meta data to facilitate archiving, or data used by a custom digital document application.

The XDP file 516 is an XML file, so all XML tools, XML system interfaces, and web services can work directly with it. Also the XML data is directly accessible by such tools and interfaces. Further, the embedded mark-up language document 510, e.g. PDF document, can provide all the traditional PDF benefits of precision document layout and high fidelity printing by embedding the PDF in an XML element, i.e. XDP file 516.

Preferably the PDF representation of embedded mark-up language document 510 is chosen when file size and transmission time are important and when the document is packaged with supplementary data or images. The XDP representation is chosen when the document and user data must travel in XML work flows, the user data needs to be manipulated with XML tools, or when it needs to be stored in an XML repository.

Preferably, the Adobe XML architecture as specified e.g. the Adobe XML architecture specification, October 2003, Adobe Systems Incorporated is used for the embedded mark-up language document 510, XDP file 516 and for the conversion between these two representations. Usage of the Adobe XML architecture is advantageous as it uses an object-oriented approach to map user XML form data and data from dynamic sources to particular data entry fields in the form layout.

However, it is to be noted that the present invention is not restricted to the Adobe XML architecture but that it can be used for other mark-up languages and respective embedded mark-up language documents as well, in particular for extensible mark-up languages.

### List of Reference Numerals

| | |
|---|---|
| 100 | Data processing system |
| 102 | Server computer |
| 104 | Processor |
| 106 | interface |
| 108 | Network |
| 110 | Program component |
| 112 | Web service request |
| 114 | Program component |
| 116 | Selection rules |
| 118 | Table |
| 120 | Alternative web service |
| 122 | Client device |
| 124 | Storage |
| 126 | Application program |
| 128 | Processor |
| 130 | Program module |
| 132 | Central web service |
| 134 | interface |
| 136 | Location determination module |
| 138 | Web service response |
| 300 | Data processing system |
| 302 | Server computer |
| 304 | Processor |
| 306 | Interface |
| 308 | Network |
| 310 | Program component |
| 312 | Web service request |
| 314 | Program component |
| 314' | Program component |
| 316 | Selection rules |
| 316' | Selection rules |
| 318 | Table |
| 318' | Table |
| 320 | Alternative web service |
| 322 | Client device |
| 324 | Storage |
| 326 | Application program |
| 328 | Processor |
| 330 | Program module |
| 332 | Central web service address |
| 334 | Interface |
| 336 | Location determination module |
| 338 | Web service response |
| 340 | Program component |
| 342 | System clock |
| 510 | Embedded mark-up language document |
| 512 | Embedded XML data |
| 514 | Data entry field |
| 516 | XDP file |
| 518 | XML form data |
| 520 | XML form template |
| 522 | XML configuration information |
| 524 | Other XML information |

## Claims

1. A client device comprising:
- means (124; 324) for storing a central web service address of a server computer providing a central web service,
- means (130; 330) for generating a web service request (112; 312),
- interface means (134; 334) for sending the web service request to the central web service address and for receiving a web service response (138; 338) from one of a plurality of alternative web services selected by the central web service using selection rules (316),
- means (340) for determining if the central web service is unavailable,
- means (314') for selecting one of the plurality of alternative web services using local selection rules (316') which are a local copy of the selection rules (316) stored on the server computer, if the central web service is unavailable,
the interface means being adapted, if the central web service is unavailable, to re-send the web service request to an address of the selected one of the plurality of alternative web services and for receiving (414) a web service response from the alternative web service wherein the address of said selected one of the plurality of alternative web services is comprised in a local table (318') of the client device, wherein the local table (318') is a local copy of a table (318) stored on the server computer, wherein the local table (318') comprises addresses of the plurality of alternative web services.

2. The client device of claim 1, the means for determining if the central web service is unavailable comprising timer means for application of a time-out criterion.

3. The client device of claim 1 or 2, further comprising location determination means (336) for generating location information, the means for generating the web service request being adapted to include the location information in the web service request.

4. The client device of any one of the preceding claims 1 to 3, further comprising an application program (126; 326), wherein the application program contains the central web service address.

5. The client device of any one of the preceding claims 1 to 4, the application program being adapted to use an embedded mark-up language document for entry of user data for the web service request.

6. The client device of any one of the preceding claims 1 to 5, the application program implementing an industrial control functionality.

7. The client device of any one of the preceding claims 1 to 6 being a car navigation system.

8. A data processing method for using web services, the method comprising:
- storing a central web service address (132; 332) of a server computer providing a central web service on a client device,
- generating a web service request by the client device,
- sending the web service request from the client device to the central web service address,
- receiving a web service response (138; 338) from one of a plurality of alternative web services selected by the central web service using selection rules (316),
and further comprising:
- determining if the central web service is unavailable, and, if the central web service is unavailable,
i. selecting one of the plurality of alternative web services using the local selection rules (316') which are a local copy of selection rules (316) stored on the server computer,
ii. re-sending the web service request to an address of the selected one of the plurality of alternative web services and receiving (414) a web service response from the alternative web service, wherein the address of said selected one of the plurality of alternative web services is comprised in a local table (318') of the client device, wherein the local table (318') is a local copy of a table (318) stored on the server computer, wherein the local table (318') comprises addresses of the plurality of alternative web services.

9. A computer program product comprising computer executable instructions for performing all the steps of the method of claim 8 when said computer program is run on a computer.

10. A data processing system comprising a server computer and at least one client device according to any one of claims 1 to 7,
the server computer comprising:
- means (104; 304) for providing a central web service, the central web service having a central web service address (132; 332),
- interface means (106; 306) for receiving a web service request (112; 312) addressed to the central web service address from the client device and for forwarding the web service request to one of a plurality of alternative web services,
the central web service being adapted to select the one of the plurality of alternative web services and the server computer comprising a stored selection table (118, 318).

## Patentansprüche

1. Client-Gerät, umfassend:
- Mittel (124; 324) zum Speichern einer Adresse eines zentralen Webdiensts eines Server-Rechners, welcher einen zentralen Webdienst bereitstellt,
- Mittel (130; 330) zum Erzeugen einer Webdienst-Anforderung (112; 312),
- Schnittstellen-Mittel (134; 334) zum Senden der Webdienst-Anforderung zu der Adresse des zentralen Webdiensts und zum Empfangen einer Webdienst-Antwort (138; 338) von einem von mehreren alternativen Webdiensten, welcher durch den zentralen Webdienst unter Verwendung von Auswahlregeln (316) ausgewählt worden ist,
- Mittel (340) zum Bestimmen, ob der zentrale Webdienst nicht verfügbar ist,
- Mittel (314') zum Auswählen von einem der mehreren alternativen Webdienste unter Verwendung lokaler Auswahlregeln (316'), welche eine lokale Kopie der Auswahlregeln (316) sind, die auf dem Server-Rechner gespeichert sind, wenn der zentrale Webdienst nicht verfügbar ist,
wobei die Schnittstellen-Mittel geeignet sind, wenn der zentrale Webdienst nicht verfügbar ist, zum erneuten Senden der Webdienst-Anforderung zu einer Adresse des ausgewählten der mehreren alternativen Webdienste und zum Empfangen (414) einer Webdienst-Antwort von dem alternativen Webdienst, wobei die Adresse des ausgewählten der mehreren alternativen Webdienste in einer lokalen Tabelle (318') des Client-Geräts enthalten ist, wobei die lokale Tabelle (318') eine lokale Kopie einer Tabelle (318) ist, welche auf einem Server-Rechner gespeichert ist, wobei die lokale Tabelle (318') Adressen der mehreren alternativen Webdienste enthält.

2. Client-Gerät nach Anspruch 1, wobei das Mittel zum Bestimmen, ob der zentrale Webdienst nicht verfügbar ist, Timer-Mittel umfasst zum Anwenden eines Timeout-Kriteriums.

3. Client-Gerät nach Anspruch 1 oder 2, ferner umfassend Ortsbestimmungs-Mittel (336) zum Erzeugen von Ortsinformation, wobei die Mittel zum Erzeugen der Webdienst-Anforderung geeignet sind zum Hinzufügen der Ortsinformation zu der Webdienst-Anforderung.

4. Client-Gerät nach einem der vorhergehenden Ansprüche 1 bis 3, ferner umfassend ein Anwendungsprogramm (126; 326), wobei das Anwendungsprogramm die Adresse des zentralen Webdiensts enthält.

5. Client-Gerät nach einem der vorhergehenden Ansprüche 1 bis 4, wobei das Anwendungsprogramm geeignet ist zum Verwenden eines eingebetteten Markup-Language-Dokuments zum Eingeben von Nutzerdaten für die Webdienst-Anforderung.

6. Client-Gerät nach einem der vorhergehenden Ansprüche 1 bis 5, wobei das Anwendungsprogramm eine Funktion einer industriellen Steuerung implementiert.

7. Client-Gerät nach einem der vorhergehenden Ansprüche 1 bis 6, wobei das Client-Gerät ein Navigationssystem für ein Fahrzeug ist.

8. Verfahren zum Verarbeiten von Daten zum Verwenden von Webdiensten, wobei das Verfahren umfasst:
- Speichern einer Adresse eines zentralen Webdiensts (132; 332) eines Server-Rechners, welcher einen zentralen Webdienst auf einem Client-Gerät bereitstellt,
- Erzeugen einer Webdienst-Anforderung durch das Client-Gerät,
- Senden der Webdienst-Anforderung von dem Client-Gerät zu der Adresse des zentralen Webdiensts,
- Empfangen einer Webdienst-Antwort (138; 338) von einem von mehreren alternativen Webdiensten, welcher durch den zentralen Webdienst unter Verwendung von Auswahlregeln (316) ausgewählt worden ist,
und wobei das Verfahren ferner umfasst:
- Bestimmen, ob der zentrale Webdienst nicht verfügbar ist, und, wenn der zentrale Webdienst nicht verfügbar ist,
i. Auswählen von einem der mehreren alternativen Webdienste unter Verwendung der lokalen Auswahlregeln (316'), welche eine lokale Kopie der Auswahlregeln (316) sind, die auf dem Server-Rechner gespeichert sind,
ii. erneutes Senden der Webdienst-Anforderung zu einer Adresse des ausgewählten der mehreren alternativen Webdienste und zum Empfangen (414) einer Webdienst-Antwort von dem alternativen Webdienst, wobei die Adresse des ausgewählten der mehreren alternativen Webdienste in einer lokalen Tabelle (318') des Client-Geräts enthalten ist, wobei die lokale Tabelle (318') eine lokale Kopie einer Tabelle (318) ist, welche auf dem Server-Rechner gespeichert ist, wobei die lokale Tabelle (318') Adressen der mehreren alternativen Webdienste enthält.

9. Computerprogrammprodukt, welches von einem Computer ausführbare Anweisungen umfasst, zum Ausführen aller Schritte des Verfahrens nach Anspruch 8, wenn das Computerprogramm auf einem Computer ausgeführt wird.

10. System zum Verarbeiten von Daten, umfassend einen Server-Rechner und wenigstens ein Client-Gerät nach einem der Ansprüche 1 bis 7,
wobei der Server-Rechner umfasst:
- Mittel (104; 304) zum Bereitstellen eines zentralen Webdiensts, wobei der zentrale Webdienst eine Adresse eines zentralen Webdiensts (132; 332) aufweist,
- Schnittstellen-Mittel (106; 306) zum Empfangen einer Webdienst-Anforderung (112; 312), welche an die Adresse des zentralen Webdiensts gerichtet ist, von dem Client-Gerät, und zum Weiterleiten der Webdienst-Anforderung zu einem von mehreren alternativen Webdiensten,
wobei der zentrale Webdienst geeignet ist zum Auswählen von einem der mehreren alternativen Webdienste, und wobei der Server-Rechner eine gespeicherte Auswahltabelle (118, 318) enthält.

## Revendications

1. Dispositif client comportant :
- un moyen (124 ; 324) servant à conserver une adresse de service Web central d'un ordinateur serveur assurant un service Web central,
- un moyen (130 ; 330) servant à générer une demande (112 ; 312) de service Web,
- un moyen (134 ; 334) d'interface servant à envoyer la demande de service Web à l'adresse de service Web central et à recevoir une réponse (138 ; 338) de service Web provenant d'un service parmi une pluralité de services Web de substitution sélectionnés par le service Web central à l'aide de règles (316) de sélection,
- un moyen (340) servant à déterminer si le service Web central est indisponible,
- un moyen (314') servant à sélectionner un service parmi la pluralité de services Web de substitution à l'aide de règles locales (316') de sélection qui sont une copie locale des règles (316) de sélection conservées sur l'ordinateur serveur, si le service Web central est indisponible,
le moyen d'interface étant prévu, si le service Web central est indisponible, pour réémettre la demande de service Web vers une adresse du service sélectionné parmi la pluralité de services Web de substitution et pour recevoir (414) une réponse de service Web provenant du service Web de substitution, l'adresse dudit service sélectionné parmi la pluralité de services Web de substitution étant comprise dans une table locale (318') du dispositif client, la table locale (318') étant une copie locale d'une table (318) conservée sur l'ordinateur serveur, la table locale (318') comprenant des adresses de la pluralité de services Web de substitution.

2. Dispositif client selon la revendication 1, le moyen servant à déterminer si le service Web central est indisponible comportant un moyen de temporisateur servant à l'application d'un critère d'expiration de délai.

3. Dispositif client selon la revendication 1 ou 2, comportant en outre un moyen (336) de détermination de position servant à générer des informations de position, le moyen servant à générer la demande de service Web étant prévu pour inclure les informations de position dans la demande de service Web.

4. Dispositif client selon l'une quelconque des revendications 1 à 3, comportant en outre un programme applicatif (126 ; 326), le programme applicatif contenant l'adresse de service Web central.

5. Dispositif client selon l'une quelconque des revendications 1 à 4, le programme applicatif étant prévu pour utiliser un document incorporé en langage de balisage pour la saisie de données d'utilisateur destinées à la demande de service Web.

6. Dispositif selon l'une quelconque des revendications 1 à 5, le programme applicatif mettant en oeuvre une fonctionnalité de commande industrielle.

7. Dispositif selon l'une quelconque des revendications 1 à 6, constituant un système de navigation pour automobile.

8. Procédé de traitement de données pour l'utilisation de services Web, le procédé comportant les étapes consistant à :
- conserver sur un dispositif client une adresse (132 ; 332) de service Web central d'un ordinateur serveur assurant un service Web central,
- faire générer une demande de service Web par le dispositif client,
- envoyer la demande de service Web du dispositif client à l'adresse de service Web central,
- recevoir une réponse (138 ; 338) de service Web provenant d'un service parmi une pluralité de services Web de substitution sélectionnés par le service Web central à l'aide de règles (316) de sélection,
et comportant en outre les étapes consistant à :
- déterminer si le service Web central est indisponible et, si le service Web central est indisponible,
i. sélectionner un service parmi la pluralité de services Web de substitution à l'aide des règles locales (316') de sélection qui sont une copie locale de règles (316) de sélection conservées sur l'ordinateur serveur,
ii. réémettre la demande de service Web vers une adresse du service sélectionné parmi la pluralité de services Web de substitution et pour recevoir (414) une réponse de service Web provenant du service Web de substitution, l'adresse dudit service sélectionné parmi la pluralité de services Web de substitution étant comprise dans une table locale (318') du dispositif client, la table locale (318') étant une copie locale d'une table (318) conservée sur l'ordinateur serveur, la table locale (318') comprenant des adresses de la pluralité de services Web de substitution.

9. Produit de programme informatique comprenant des instructions exécutables par ordinateur destinées à effectuer toutes les étapes du procédé selon la revendication 8 lorsque ledit programme informatique est exécuté sur un ordinateur.

10. Système de traitement de données comportant un ordinateur serveur et au moins un dispositif client selon l'une quelconque des revendications 1 à 7, l'ordinateur serveur comportant :
- un moyen (104 ; 304) servant à assurer un service Web central, le service Web central étant doté d'une adresse (132 ; 332) de service Web central,
- un moyen (106 ; 306) d'interface servant à recevoir une demande (112 ; 312) de service Web adressée à l'adresse de service Web central en provenance du dispositif client et pour transmettre la demande de service Web à un service parmi une pluralité de services Web de substitution,
le service Web central étant adapté pour sélectionner le service en question parmi la pluralité de services Web de substitution et l'ordinateur serveur comportant une table (118, 318) de sélection mémorisée.
